# EUROPEAN PATENT APPLICATION

(11) **EP 4 462 859 A1**
(43) Date of publication of application: **13.11.2024**
(21) Application number: 22917806.6
(22) Date of filing: 06.01.2022
(51) Int. Cl.: H04W 24/10

(54) **WLAN SENSING MEASUREMENT METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/070596
(87) International publication number: WO 2023/130331

(57) **Abstract**

The embodiments of the present disclosure relate to the technical field of mobile communications. Provided are a WLAN sensing measurement method and apparatus, and an electronic device and a storage medium. The WLAN sensing measurement method comprises: sending a null data packet announcement (NDPA) frame, and carrying identification information in the NDPA frame, wherein the identification information comprises a sensing measurement establishment identifier; and determining a sensing detection type corresponding to the identification information, and executing wireless local area network (WLAN) sensing measurement according to the sensing detection type. Provided in the embodiments of the present disclosure is a non-TB sensing measurement process.

## Description

### TECHNICAL FIELD

The present disclosure relates to the field of mobile communication technology, particularly to a method and an apparatus for WLAN sensing measurement, an electronic device, and a storage medium.

### BACKGROUND

With the rapid development of mobile communication technology, wireless fidelity (Wi-Fi) technology has made great progress in transmission rate and throughput. At present, the research contents of Wi-Fi technology include 320MHz bandwidth transmission, aggregation and coordination of a plurality of frequency bands, etc. The main application scenarios include video transmission, augmented reality (AR), virtual reality (VR), etc.

In the Wi-Fi technology currently being studied, wireless local area network (WLAN) sensing technology may be supported. For example, application scenarios of the WLAN sensing are such as location discovery, proximity detection, and presence detection in dense environments (such as home environments and corporate environments). A sensing method of non-trigger based (non-TB) sounding is one of the main sensing methods in the WLAN sensing procedure. Therefore, there is a need to provide a non-TB sensing measurement procedure.

### SUMMARY

Embodiments of the present disclosure provides a method and an apparatus for WLAN sensing measurement, an electronic device, and a storage medium, so as to provide a non-TB sensing measurement procedure.

In an aspect, embodiments of the disclosure provide a method for wireless local area network (WLAN) sensing measurement. The method is applied to a station (STA). The method includes: sending a null data packet announcement (NDPA) frame and carrying identification (ID) information in the NDPA frame, in which the ID information includes a sensing measurement setup ID; and determining a sensing sounding type corresponding to the ID information, and performing a WLAN sensing measurement based on the sensing sounding type.

In another aspect, embodiments of the disclosure also provide a method for WLAN sensing measurement. The method is applied to an access point (AP). The method includes: receiving a NDPA frame and carrying ID information in the NDPA frame, in which the ID information includes a sensing measurement setup ID; and determining a sensing sounding type corresponding to the ID information, and performing a WLAN sensing measurement based on the sensing sounding type.

In another aspect, embodiments of the disclosure also provide a STA. The STA includes: a sending module, configured to send a NDPA frame, and carry ID information in the NDPA frame, in which the ID information includes a sensing measurement setup ID; and an execution module, configured to determine the sensing sounding type corresponding to the ID information, and perform a WLAN sensing measurement based on the sensing sounding type.

In another aspect, embodiments of the disclosure also provide an AP. The AP includes a receiving module, configured to receive a NDPA frame, and obtain ID information carried in the NDPA frame, in which the ID information includes a sensing measurement setup ID; and a processing module, configured to determine a sensing sounding type corresponding to the ID information, and perform a WLAN sensing measurement based on the sensing sounding type.

In another aspect, embodiments of the disclosure also provide an apparatus for WLAN sensing measurement, applied to a STA. The apparatus includes: a NDPA sending module, configured to send a NDPA frame, and carry identification information in the NDPA frame, in which the ID information includes a sensing measurement setup ID; and a measurement execution module, configured to determine a sensing sounding type corresponding to the ID information, and perform a WLAN sensing measurement based on the sensing sounding type.

In another aspect, embodiments of the disclosure also provide an apparatus for WLAN sensing measurement, applied to an AP. The apparatus includes: a NDPA receiving module, configured to receive a NDPA frame, and obtain ID information carried in the NDPA frame, in which the ID information includes a sensing measurement setup ID; and a measurement processing module, configured to determine a sensing sounding type corresponding to the ID information, and perform a WLAN sensing measurement based on the sensing sounding type.

Embodiments of the disclosure also provide an electronic device, including: a processor, and a memory storing a computer program executable by the processor. When the computer program is executed by the processor, the method according to one or more of the embodiments of the disclosure is implemented.

Embodiments of the disclosure also provide a computer-readable storage medium having a computer program stored which, when executed by a processor, to implement the method according to one or more of the embodiments of the disclosure.

In the embodiments of the disclosure, the NDPA frame is sent, and the ID information is carried in the NDPA frame; the sensing sounding type corresponding to the ID information is determined, and the WLAN sensing measurement is performed according to the sensing sounding type. The embodiments of the disclosure provide a sensing measurement method based on non-TB.

Additional aspects and advantages of the embodiments of the disclosure may be partially given in the description below, which may become apparent from the description below, or will be learned through the practice of the disclosure.

### BRIEF DESCRIPTION OF THE DRAWINGS

In order to more clearly illustrate the technical solutions of the embodiments of the disclosure, the drawings required for use in the description of the embodiments of the disclosure may be briefly introduced below. Obviously, the drawings in the following description are only some embodiments of the disclosure. For those skilled in the art, other drawings can be obtained based on these drawings without creative works.
FIG. 1 is a first flowchart of a Method for WLAN sensing measurement according to an embodiment of the disclosure.
FIG. 2 is a first diagram of a first example according to an embodiment of the disclosure.
FIG. 3 is a second diagram of the first example according to an embodiment of the disclosure.
FIG. 4 is a third diagram of the first example according to an embodiment of the disclosure.
FIG. 5 is a diagram of a second example according to an embodiment of the disclosure.
FIG. 6 is a diagram of a third example according to an embodiment of the disclosure.
FIG. 7 is a diagram of a fourth example according to an embodiment of the disclosure.
FIG. 8 is a second flowchart of a method for WLAN sensing measurement according to an embodiment of the disclosure.
FIG. 9 is a third flowchart of a method for WLAN sensing measurement according to an embodiment of the disclosure.
FIG. 10 is a fourth flowchart of a method for WLAN sensing measurement according to an embodiment of the disclosure.
FIG. 11 is a fifth flowchart of a method for WLAN sensing measurement according to an embodiment of the disclosure.
FIG. 12 is a sixth flowchart of a method for WLAN sensing measurement according to an embodiment of the disclosure.
FIG. 13 is a structure diagram of a STA according to an embodiment of the disclosure.
FIG. 14 is a first structure diagram of an apparatus for WLAN sensing measurement according to an embodiment of the disclosure.
FIG. 15 is a structure diagram of an AP according to an embodiment of the disclosure.
FIG. 16 is a second structure diagram of an apparatus for WLAN sensing measurement according to an embodiment of the disclosure.
FIG. 17 is a structure diagram of an electronic device according to an embodiment of the disclosure.

### DETAILED DESCRIPTION

In the embodiments of the disclosure, the term "and/or" describes an association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

The term "a plurality of" in the embodiments of the disclosure refers to two or more than two, and other quantifiers are similar thereto.

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all the implementations consistent with the present invention. Rather, they are merely examples of apparatus and methods consistent with some aspects of the present invention as recited in the appended claims.

The terminology used in the disclosure is for the purpose of only describing particular embodiments and is not intended to limit the disclosure. As used in this disclosure and the appended claims, the singular forms "a/an" "said" and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used in the disclosure to describe various information, such information should not be limited to these terms. These terms are used only to distinguish information of the same type from one another. For example, without departing from the scope of the disclosure, first information may also be referred to as second information, and similarly, second information may also be referred to as first information. Depending on the context, for example, the word "if" as used herein may be interpreted as "when" or "in case that" or "in response to determining."

The technical solutions in the embodiments of the disclosure may be clearly and completely described below in conjunction with the drawings in the embodiments of the disclosure. Obviously, the described embodiments are only a part of the embodiments of the disclosure, not all of the embodiments. Based on the embodiments in the disclosure, all other embodiments obtained by those skilled in the art without making any creative works may fall within the scope of protection of the disclosure.

The embodiments of the disclosure provide a method and an apparatus for WLAN sensing measurement, an electronic device, and a storage medium, which are used to provide a non-TB sensing measurement procedure.

The method and the apparatus are based on the same invention concept. Since the method and the apparatus solve the problem in a similar principle, the implementation of the apparatus and the method can refer to each other, and the repeated parts will not be repeated.

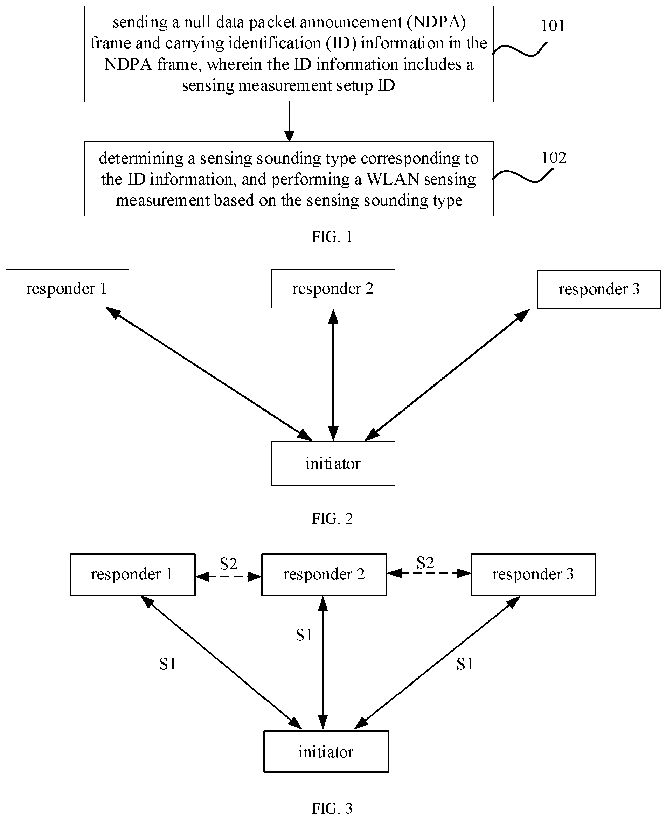

As shown in FIG. 1, an embodiment of the disclosure provides a method for WLAN sensing measurement. Optionally, the method may be applied to a station device (STA). The method may include the following steps at 101-102.

At 101, a NDPA frame is sent and identification (ID) information is carried in the NDPA frame. The ID information includes a sensing measurement setup ID.

As a first example, referring to FIG. 2 to FIG. 4, a WLAN sensing architecture and a WLAN sensing procedure of the method for WLAN sensing measurement according to the embodiment of the disclosure are first introduced.

FIG. 2 illustrates an architecture diagram of a WLAN sensing procedure. A sensing initiator (or an initiator) initiates WLAN sensing (for example, initiating a WLAN sensing session), and there may be a plurality of sensing responders (or sensing receivers) or responders that make a response, such as, responder 1, responder 2, and responder 3 shown in FIG. 2. When the sensing initiator initiates WLAN sensing, a plurality of associated or unassociated sensing responders for WLAN sensing may make responses.

Referring to FIG. 3, the sensing initiator communicates with the sensing responder via a communication connection, such as the shown communication connection S1; the sensing responders communicate with each other via a communication connection S2.

Each sensing initiator can be a client. Each sensing responder (in this example, sensing responder 1 to sensing responder 3) can be a STA or an AP. In addition, STA and AP can take a plurality of roles in the WLAN sensing procedure. For example, in the WLAN sensing procedure, STA can also serve as a sensing initiator, and the sensing initiator may be a sensing transmitter, a sensing receiver, both the sensing transmitter and the sensing receiver, or neither the sensing transmitter nor the sensing receiver. In the WLAN sensing procedure, the sensing responder may also be a sensing transmitter, a sensing receiver, or both the sensing transmitter and the sensing receiver.

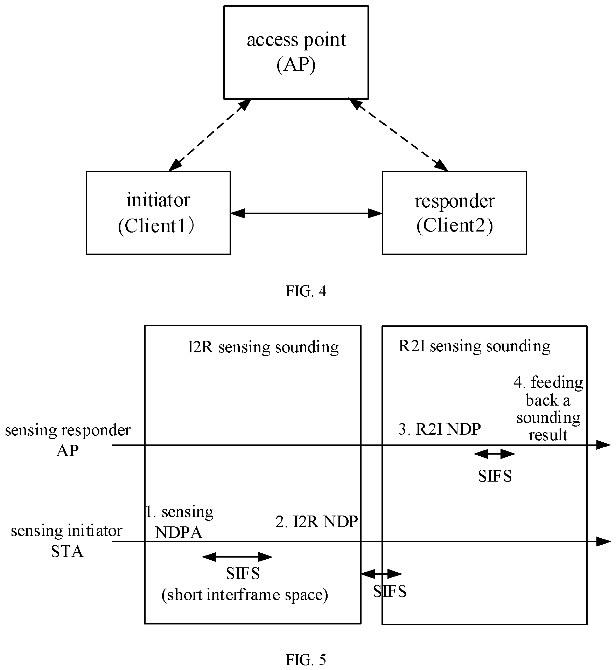

In another architecture, as shown in FIG. 4, both the sensing initiator and the sensing responder can be clients, the sensing initiator and the sensing responder can communicate with each other by connecting to the same AP. in FIG. 4, Client1 is a sensing initiator, and Client2 is a sensing responder.

Generally, the WLAN sensing procedure includes a setup of a WLAN sensing session, a setup of a WLAN sensing measurement, and a termination of a WLAN sensing measurement. The WLAN sensing procedure generally includes a triggered based sounding (TB) based sensing mode and a non-TB based sensing mode. Specifically, the TB-based mode means that the AP is an initiator or a transmitter, and the non-TB based mode means that the STA is an initiator or a transmitter.

Specifically, in a non-TB based scenario, the STA sends a null data packet announcement (NDPA) frame to the AP, and the NDPA frame indicates sending a NDP frame. The STA carries ID information in the NDPA frame, where the ID information is used to identify or indicate a sensing measurement procedure currently being performed.

The ID information includes a sensing measurement setup ID. Specifically, related parameter information of the WLAN sensing measurement procedure has been determined in the WLAN sensing measurement setup procedure. Therefore, after the sensing measurement setup ID is determined, the related parameter information can be determined. The parameter information includes ID information of STA and AP, an uplink (UL) sounding process and a downlink (DL) sounding process, for example. The ID information is an initiator or a transmitter, for example.

At 102, a sensing sounding type corresponding to the ID information is determined, and a WLAN sensing measurement is performed based on the sensing sounding type.

The STA sends the NDPA frame, indicates the ID information to the AP through the NDPA frame, and performs the WLAN sensing measurement based on the sensing sounding type corresponding to the ID information. Optionally, the sensing sounding type is, for example, an UL sounding, a DL sounding, or both the UL sounding and the DL sounding.

In the embodiment of the disclosure, the NDPA frame is sent, and the ID information is carried in the NDPA frame; the sensing sounding type corresponding to the ID information is determined, and the WLAN sensing measurement is performed based on the sensing sounding type. The embodiment of the disclosure provides a sensing measurement method based on non-TB.

Optionally, in an embodiment of the disclosure, the sensing sounding type includes at least one of an UL sensing sounding and a DL sensing sounding. Specifically, in an UL sounding scenario where the STA acts as an initiator, after sending the NDPA frame, the STA sends an Initiator to Responder (I2R) NDP frame to the AP. In a DL sounding scenario where the STA acts as an initiator, after sending the NDPA frame, the STA sends a Responder to Initiator (R2I) NDP frame to the AP. In the scenario that includes both DL sounding and UL sounding, both the I2R NDP frame and the R2I NDP frame can be sent.

In an optional embodiment, performing the WLAN sensing measurement based on the sensing sounding type includes the following cases 1 to 3.

### Case 1

In case that the sensing sounding type includes the UL sensing sounding and the DL sensing sounding, the UL sensing sounding is performed and an UL NDP frame is sent; and after sending the UL NDP frame, an AP is instructed to perform the DL sensing sounding and feed back a sounding result.

When UL sounding and DL sounding are included at the same time, an order in which the two soundings occur is fixed (usually, the UL sounding occurs first, then the DL sounding occurs), and after the DL sounding is completed, the AP returns a feedback for the UL sounding to the STA. Specifically, as a second example, referring to FIG. 5, in the I2R sensing sounding (UL sounding) process, the sensing initiator STA first executes the step 1 to send a sensing NDPA frame, then executes the step 2 to send an I2R NDP frame, where the I2R NDP participates in the sensing measurement procedure. In the R2I sensing sounding (DL sounding) process, the sensing responder can first execute the step 3 to send an R2I NDP frame, where the R2I NDP does not participate in the sensing measurement procedure, and execute the step 4 to feed back a sounding result (feedback).

### Case 2

In case that the sensing sounding type includes the UL sensing sounding, the UL sensing sounding is performed and an UL NDP frame is sent; and after sending the UL NDP frame, the AP is instructed to perform the DL sensing sounding, send a DL NDP frame, and feed back a sounding result.

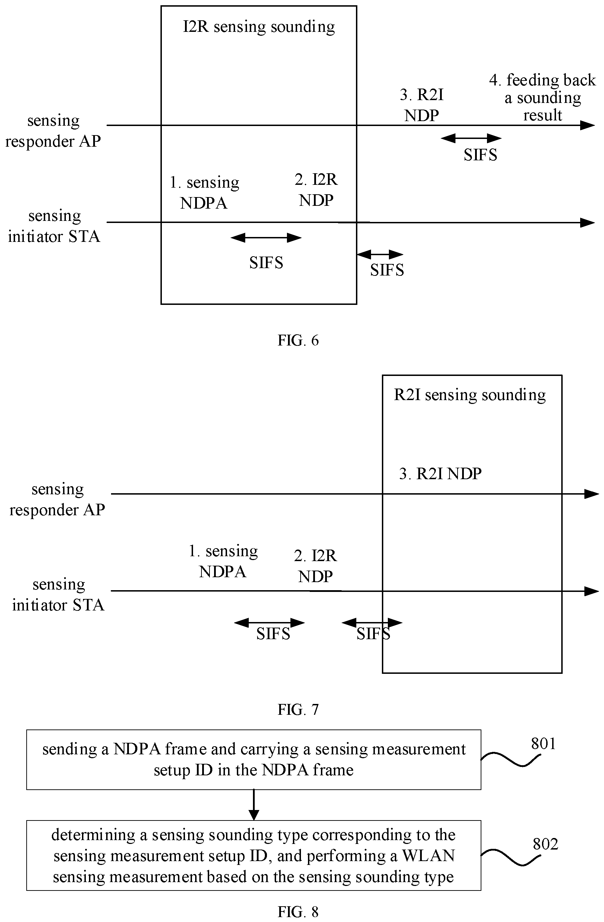

When only the UL sounding is included, the AP needs to return a feedback for the UL sounding to the STA. Specifically, as a fourth example, referring to FIG. 6, in the I2R sensing sounding (DL sounding) process, the sensing initiator STA first executes the step 1 to send a sensing NDPA frame, then executes the step 2 to send an I2R NDP frame. Thereafter, the sensing responder executes the step 3 to send an R2I NDP frame, then executes the step 4 to feed back a sounding result (feedback).

In this process, both the I2R NDP and the R2INDP participate in the sensing measurement procedure.

### Case 3

In case that the sensing sounding type includes the DL sensing sounding, the AP is instructed to perform the DL sensing sounding.

When only the DL sounding is included, the AP does not need to return a feedback for the UL sounding to the STA. Specifically, as a fifth example, referring to FIG. 7, in the R2I sensing sounding (UL sounding) process, the sensing initiator STA first executes the step 1 to send a sensing NDPA frame, then executes the step 2 to send an I2R NDP frame, where the I2R NDP does not participate in the sensing measurement procedure. Thereafter, the sensing responder executes the step 3 to perform the DL sensing sounding and send an R2I NDP frame, where the R2I NDP participates in the sensing measurement procedure.

Optionally, in an embodiment of the disclosure, the ID information also includes a sensing sounding type ID.

The STA carries the sensing sounding type ID in the sent NDPA frame to identify transmission of the UL sounding and the DL sounding. For example, two bits may be used to identify. When each of the bits is set to "1", it indicates that both the UL sounding and the DL sounding are included. That is, "11" indicates that both the UL sounding and the DL sounding are included.

Alternatively, a corresponding bit position is "1", indicating the UL sounding or the DL sounding. For example, "10" indicates that only the UL sounding is included, and "01" indicates that only the DL sounding is included.

It may be understood that, since the ID information includes the sensing sounding type ID, the Initiator and the Responder do not need to explicitly provide ID information of the sensing measurement during the sensing measurement setup procedure.

Optionally, in the embodiment of the disclosure, determining the sensing sounding type corresponding to the ID information includes:
determining a sensing sounding type included in the WLAN sensing measurement corresponding to the sensing measurement setup ID; or
determining a sensing sounding type indicated by the sensing sounding type ID.

That is to say, when determining the sensing sounding type, it can be determined based on the sensing measurement setup ID or the sensing sounding type ID. Specifically, the manner of determining based on the sensing measurement setup ID is equivalent to an implicit indication manner, and the manner of determining based on the sensing sounding type ID is equivalent to an explicit indication manner.

Optionally, the sensing measurement setup ID is determined by an initiator of the WLAN sensing measurement during a WLAN sensing measurement setup procedure.

The related parameter information for the WLAN sensing measurement procedure has been determined in the WLAN sensing measurement setup procedure and is indicated in an explicit or implicit manner. The parameter information includes ID information of STA and AP, an UL sounding process and a DL sounding process, for example. The ID information is an initiator or a transmitter, for example.

For example, in the WLAN sensing measurement setup procedure, the sensing measurement setup ID is determined by the Initiator, and the Initiator determines the ID information of the AP and the STA in the sensing measurement corresponding to the sensing measurement setup ID, and parameter information such as sending either DL NDP or UL NDP, or sending both DL NDP and UL NDP.

In the embodiment of the disclosure, the NDPA frame is sent, and the ID information is carried in the NDPA frame; the sensing sounding type corresponding to the ID information is determined, and the WLAN sensing measurement is performed based on the sensing sounding type. The embodiment of the disclosure provides a sensing measurement method based on non-TB.

Referring to FIG. 8, an embodiment of the disclosure further provides a method for WLAN sensing measurement, which is applied to a STA. The method may include the following steps 801-802.

At 801, a NDPA frame is sent, and a sensing measurement setup ID is carried in the NDPA frame.

In the non-TB Based scenario, the STA sends an NDPA frame to the AP. The NDPA frame carries a sensing measurement setup ID, which is used to identify the sensing measurement procedure currently being performed. The related parameter information for the WLAN sensing measurement procedure has been determined in the WLAN sensing measurement setup procedure. Therefore, after the sensing measurement setup ID is determined, the related parameter information can be determined. The parameter information includes ID information of STA and AP, an UL sounding process and a DL sounding process, for example. The ID information is an initiator or a transmitter, for example.

At 802, a sensing sounding type corresponding to the sensing measurement setup ID is determined, and the WLAN sensing measurement is performed based on the sensing sounding type.

The WLAN sensing measurement is performed based on the sensing sounding type corresponding to the sensing measurement setup ID. Optionally, the sensing sounding type is, for example, UL sounding, DL sounding, or both the UL sounding and the DL sounding.

In case that the sensing sounding type includes the UL sensing sounding and the DL sensing sounding, the UL sensing sounding is performed and an UL NDP frame is sent; and after sending the UL NDP frame, the AP is instructed to perform the DL sensing sounding and feed back a sounding result.

When UL sounding and DL sounding are included at the same time, an order in which the two soundings occur is fixed (usually, the UL sounding occurs first, then the DL sounding occurs), and after the DL sounding is completed, the AP returns a feedback for the UL sounding to the STA. Specifically, as a second example, referring to FIG. 5, in the I2R sensing sounding (UL sounding) process, the sensing initiator STA first executes the step 1 to send a sensing NDPA frame, then executes the step 2 to send an I2R NDP frame, where the I2R NDP participates in the sensing measurement procedure. In the R2I sensing sounding (DL sounding) process, the sensing responder can first execute the step 3 to send an R2I NDP frame, where the R2I NDP does not participate in the sensing measurement procedure, and execute the step 4 to feed back a sounding result (feedback).

In case that the sensing sounding type includes the UL sensing sounding, the UL sensing sounding is performed and an UL NDP frame is sent; and after sending the UL NDP frame, the AP is instructed to perform the DL sensing sounding, send a DL NDP frame, and feed back a sounding result.

When only the UL sounding is included, the AP needs to return a feedback for the UL sounding to the STA. Specifically, as a fourth example, referring to FIG. 6, in the I2R sensing sounding (DL sounding) process, the sensing initiator STA first executes the step 1 to send a sensing NDPA frame, then executes the step 2 to send an I2R NDP frame. Thereafter, the sensing responder executes the step 3 to send an R2I NDP frame, then executes the step 4 to feed back a sounding result (feedback).

In this process, both the I2R NDP and the R2INDP participate in the sensing measurement procedure.

In case that the sensing sounding type includes the DL sensing sounding, the AP is instructed to perform the DL sensing sounding.

When only the DL sounding is included, the AP does not need to return a feedback for the UL sounding to the STA. Specifically, as a fifth example, referring to FIG. 7, in the R2I sensing sounding (UL sounding) process, the sensing initiator STA first executes the step 1 to send a sensing NDPA frame, then executes the step 2 to send an I2R NDP frame, where the I2R NDP does not participate in the sensing measurement procedure. Thereafter, the sensing responder executes the step 3 to perform the DL sensing sounding and send an R2I NDP frame, where the R2I NDP participates in the sensing measurement procedure.

In an embodiment of the disclosure, the NDPA frame is sent, and the sensing measurement setup ID is carried in the NDPA frame; the sensing sounding type corresponding to the sensing measurement setup ID is determined, and the WLAN sensing measurement is performed based on the sensing sounding type. The embodiment of the disclosure provides a sensing measurement method based on non-TB.

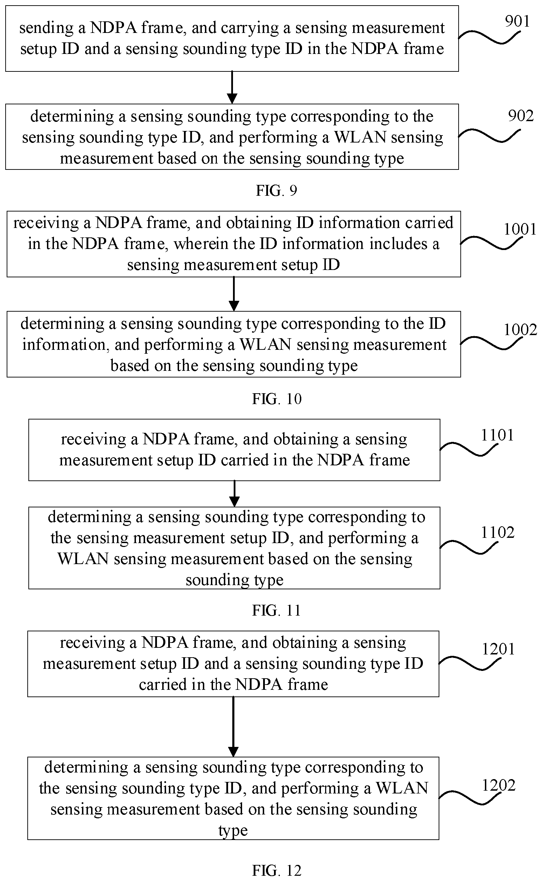

Referring to FIG. 9 , an embodiment of the disclosure further provides a method for WLAN sensing measurement, which is applied to a STA. The method may include the following steps 901-902.

At 901, a NDPA frame is sent, and a sensing measurement setup ID and a sensing sounding type ID are carried in the NDPA frame.

In the non-TB Based scenario, the STA sends an NDPA frame to the AP. The NDPA frame carries a sensing measurement setup ID, which is used to identify the sensing measurement procedure currently being performed. The related parameter information for the WLAN sensing measurement procedure has been determined in the WLAN sensing measurement setup procedure. Therefore, after the sensing measurement setup ID is determined, the related parameter information can be determined. The parameter information includes for example ID information of STA and AP, and the ID information is for example an initiator or a transmitter.

The STA carries the sensing sounding type ID in the transmitted NDPA frame to identify transmission of the UL sounding and the DL sounding.

At 902, a sensing sounding type corresponding to the sensing sounding type ID is determined, and a WLAN sensing measurement is performed based on the sensing sounding type.

The WLAN sensing measurement is performed based on the sensing sounding type corresponding to the sensing measurement setup ID. Optionally, the sensing sounding type is, for example, UL sounding, DL sounding, or both the UL sounding and the DL sounding.

The STA carries a sensing sounding type ID in the transmitted NDPA frame to identify transmission of the UL sounding and the DL sounding. For example, two bits may be used to identify. When each of the bits is set to "1", it indicates that both the UL sounding and the DL sounding are included. That is, "11" indicates that both the UL sounding and the DL sounding are included.

Alternatively, a corresponding bit position is "1", indicating the UL sounding or the DL sounding. For example, "10" indicates that only the UL sounding is included, and "01" indicates that only the DL sounding is included.

It may be understood that, since the ID information includes the sensing sounding type ID, the Initiator and the Responder do not need to explicitly provide ID information of the sensing measurement during the sensing measurement setup procedure.

In an embodiment of the disclosure, the NDPA frame is sent, and the sensing measurement setup ID and the sensing sounding type ID are carried in the NDPA frame; the sensing sounding type corresponding to the sensing sounding type ID is determined, and the WLAN sensing measurement is performed based on the sensing sounding type. The embodiment of the disclosure provides a sensing measurement method based on non-TB.

Referring to FIG. 10, an embodiment of the disclosure further provides a method for WLAN sensing measurement, which is applied to an AP. The method may include the following steps 1001-1002.

At 1001, a NDPA frame is received and ID information carried in the NDPA frame is obtained. The ID information includes a sensing measurement setup ID.

As a first example, referring to FIG. 2 to FIG. 4, a WLAN sensing architecture and a WLAN sensing procedure applied to the method for WLAN sensing measurement according to the embodiment of the disclosure are introduced. The details may be referred to the aforementioned embodiments, which will not be repeated.

Generally, the WLAN sensing procedure includes a setup of a WLAN sensing session, a setup of a WLAN sensing measurement, and a termination of a WLAN sensing measurement. The WLAN sensing procedure generally includes a triggered based sounding (TB) based sensing mode and a non-TB based sensing mode. Specifically, the TB-based mode means that the AP is an initiator or a transmitter, and the non-TB based mode means that the STA is an initiator or a transmitter.

Specifically, in a non-TB Based scenario, the STA sends a NDPA frame to the AP, where the NDPA frame is used to indicate sending a NDP. The AP receives the NDPA frame and obtains ID information carried in the NDPA frame, where the ID information is used to identify a sensing measurement procedure currently being performed.

The ID information includes a sensing measurement setup ID. Specifically, related parameter information of the WLAN sensing measurement procedure has been determined in the WLAN sensing measurement setup procedure. Therefore, after the sensing measurement setup ID is determined, the related parameter information can be determined. The parameter information includes ID information of STA and AP, an UL sounding process and a DL sounding process, for example. The ID information is an initiator or a transmitter, for example.

At 1002, a sensing sounding type corresponding to the ID information is determined, and a WLAN sensing measurement is performed based on the sensing sounding type.

The AP performs the WLAN sensing measurement based on the sensing sounding type corresponding to the ID information. Optionally, the sensing sounding type is, for example, an UL sounding, a DL sounding, or both the UL sounding and the DL sounding.

In the embodiment of the disclosure, the NDPA frame is received, and the ID information carried in the NDPA frame is obtained; the sensing sounding type corresponding to the ID information is determined, and the WLAN sensing measurement is performed based on the sensing sounding type. The embodiment of the disclosure provides a sensing measurement method based on non-TB.

Optionally, in the embodiment of the disclosure, the sensing sounding type includes at least one of an UL sensing sounding and a DL sensing sounding. Specifically, in an UL sounding scenario, the AP receives an I2R NDP frame after the STA sends the NDPA frame. In a DL sounding scenario, the AP receives an R2I NDP frame after the STA sends the NDPA frame. In the scenario including both UL sounding and UL sounding, both the I2R NDP frame and the R2I NDP frame can be sent/received.

Optionally, in the embodiment of the disclosure, performing the WLAN sensing measurement based on the sensing sounding type includes the following cases 1 to 3.

### Case 1

In case that the sensing sounding type includes the UL sensing sounding and the DL sensing sounding, an UL NDP frame is received from a STA, a DL sensing sounding is performed, and a sounding result is fed back to the STA.

When UL sounding and DL sounding are included at the same time, an order in which the two soundings occur is fixed (usually, the UL sounding occurs first, then the DL sounding occurs), and after DL sounding is completed, the AP returns a feedback for the UL sounding to the STA. Specifically, as a second example, referring to FIG. 5, in the I2R sensing sounding (UL sounding) process, the sensing initiator STA first executes the step 1 to send a sensing NDPA frame, then executes the step 2 to send an I2R NDP frame, where the I2R NDP participates in the sensing measurement procedure. In the R2I sensing sounding (DL sounding) process, the sensing responder can first execute the step 3 to send an R2I NDP frame, where the R2I NDP does not participate in the sensing measurement procedure, and execute the step 4 to feed back a sounding result (feedback).

### Case 2

In case that the sensing sounding type includes the UL sensing sounding, an UL NDP frame is received from the STA, the DL sensing sounding is performed, a DL NDP frame is sent, and a sounding result is fed back to the STA.

When only the UL sounding is included, the AP needs to return a feedback for the UL sounding to the STA. Specifically, as a fourth example, referring to FIG. 6, in the I2R sensing sounding (DL sounding) process, the sensing initiator STA first executes the step 1 to send a sensing NDPA frame, then executes the step 2 to send an I2R NDP frame. Thereafter, the sensing responder executes the step 3 to send an R2I NDP frame, then executes the step 4 to feed back a sounding result (feedback).

In this process, both the I2R NDP and the R2INDP participate in the sensing measurement procedure.

### Case 3

In case that the sensing sounding type includes the DL sensing sounding, the DL sensing sounding is performed.

When only the DL sounding is included, the AP does not need to return a feedback for the UL sounding to the STA. Specifically, as a fifth example, referring to FIG. 7, in the R2I sensing sounding (UL sounding) process, the sensing initiator STA first executes the step 1 to send a sensing NDPA frame, then executes the step 2 to send an I2R NDP frame, where the I2R NDP does not participate in the sensing measurement procedure. Thereafter, the sensing responder executes the step 3 to perform the DL sensing sounding and send an R2I NDP frame, where the R2I NDP participates in the sensing measurement procedure.

Optionally, in an embodiment of the disclosure, the ID information also includes a sensing sounding type ID.

The NDPA frame carries a sensing sounding type ID to identify transmission of the UL sounding and the DL sounding. For example, two bits may be used to identify. When each of the bits is set to "1", it indicates that both the UL sounding and the DL sounding are included. That is, "11" indicates that both the UL sounding and the DL sounding are included.

Alternatively, a corresponding bit position is "1", indicating the UL sounding or the DL sounding. For example, "10" indicates that only the UL sounding is included, and "01" indicates that only the DL sounding is included.

It may be understood that, since the ID information includes the sensing sounding type ID, the Initiator and the Responder do not need to explicitly provide ID information of the sensing measurement during the sensing measurement setup procedure.

Optionally, in the embodiment of the disclosure, determining the sensing sounding type corresponding to the ID information includes:
determining a sensing sounding type included in the WLAN sensing measurement corresponding to the sensing measurement setup ID; or
determining a sensing sounding type indicated by the sensing sounding type ID.

That is to say, when determining the sensing sounding type, it can be determined based on the sensing measurement setup ID or the sensing sounding type ID. Specifically, the manner of determining based on the sensing measurement setup ID is equivalent to an implicit indication manner, and the manner of determining based on the sensing sounding type ID is equivalent to an explicit indication manner.

Optionally, the sensing measurement setup ID is determined by an initiator of the WLAN sensing measurement during a WLAN sensing measurement setup procedure.

The related parameter information for the WLAN sensing measurement procedure has been determined in the WLAN sensing measurement setup procedure and is indicated in an explicit or implicit manner. The parameter information includes ID information of STA and AP, an UL sounding process and a DL sounding process, for example. The ID information is an initiator or a transmitter, for example.

For example, in the WLAN sensing measurement setup procedure, the sensing measurement setup ID is determined by the Initiator, and the Initiator determines the ID information of the AP and the STA in the sensing measurement corresponding to the sensing measurement setup ID, and parameter information such as sending either DL NDP or UL NDP, or sending both DL NDP and UL NDP.

In the embodiment of the disclosure, the NDPA frame is received, and the ID information carried in the NDPA frame is obtained; the sensing sounding type corresponding to the ID information is determined, and the WLAN sensing measurement is performed based on the sensing sounding type. The embodiment of the disclosure provides a sensing measurement method based on non-TB.

Referring to FIG. 11 , an embodiment of the disclosure further provides a method for WLAN sensing measurement, which is applied to an AP. The method may include the following steps 1101-1102.

At 1101, a NDPA frame is received, and a sensing measurement setup ID carried in the NDPA frame is obtained.

In the non-TB Based scenario, the AP receives the NDPA frame and obtains the sensing measurement setup ID carried in the NDPA frame. The sensing measurement setup ID is used to identify the sensing measurement procedure currently being performed. The related parameter information for the WLAN sensing measurement procedure has been determined in the WLAN sensing measurement setup procedure. Therefore, after the sensing measurement setup ID is determined, the related parameter information can be determined. The parameter information includes ID information of STA and AP, an UL sounding process and a DL sounding process, for example. The ID information is an initiator or a transmitter, for example.

At 1102, a sensing sounding type corresponding to the sensing measurement setup ID is determined, and a WLAN sensing measurement is performed based on the sensing sounding type.

The AP performs the WLAN sensing measurement based on the sensing sounding type corresponding to the sensing measurement setup ID. Optionally, the sensing sounding type is, for example, UL sounding, DL sounding, or both the UL sounding and the DL sounding.

In case that the sensing sounding type includes the UL sensing sounding and the DL sensing sounding, the UL sensing sounding is performed and an UL NDP frame is sent; and after sending the UL NDP frame, the AP is instructed to perform the DL sensing sounding and feed back a sounding result.

When UL sounding and DL sounding are included at the same time, an order in which the two soundings occur is fixed (usually, the UL sounding occurs first, then the DL sounding occurs), and after the DL sounding is completed, the AP returns a feedback for the UL sounding to the STA. Specifically, as a second example, referring to FIG. 5, in the I2R sensing sounding (UL sounding) process, the sensing initiator STA first executes the step 1 to send a sensing NDPA frame, then executes the step 2 to send an I2R NDP frame, where the I2R NDP participates in the sensing measurement procedure. In the R2I sensing sounding (DL sounding) process, the sensing responder can first execute the step 3 to send an R2I NDP frame, where the R2I NDP does not participate in the sensing measurement procedure, and execute the step 4 to feed back a sounding result (feedback).

In case that the sensing sounding type includes the UL sensing sounding, the UL sensing sounding is performed and an UL NDP frame is sent; and after sending the UL NDP frame, the AP is instructed to perform the DL sensing sounding, send a DLNDP frame, and feed back a sounding result.

When only the UL sounding is included, the AP needs to return a feedback for the UL sounding to the STA. Specifically, as a fourth example, referring to FIG. 6, in the I2R sensing sounding (DL sounding) process, the sensing initiator STA first executes the step 1 to send a sensing NDPA frame, then executes the step 2 to send an I2R NDP frame. Thereafter, the sensing responder executes the step 3 to send an R2I NDP frame, then executes the step 4 to feed back a sounding result (feedback).

In this process, both the I2R NDP and the R2INDP participate in the sensing measurement procedure.

In case that the sensing sounding type includes the DL sensing sounding, the AP is instructed to perform the DL sensing sounding.

When only the DL sounding is included, the AP does not need to return a feedback for the UL sounding to the STA. Specifically, as a fifth example, referring to FIG. 7, in the R2I sensing sounding (UL sounding) process, the sensing initiator STA first executes the step 1 to send a sensing NDPA frame, then executes the step 2 to send an I2R NDP frame, where the I2R NDP does not participate in the sensing measurement procedure. Thereafter, the sensing responder executes the step 3 to perform the DL sensing sounding and send an R2I NDP frame, where the R2I NDP participates in the sensing measurement procedure.

In the embodiment of the disclosure, a NDP is sent.

In the embodiment of the disclosure, the NDPA frame is received, and a sensing measurement setup ID carried in the NDPA frame is obtained; a sensing sounding type corresponding to the sensing measurement setup ID is determined, and the WLAN sensing measurement is performed based on the sensing sounding type. The embodiment of the disclosure provides a sensing measurement method based on non-TB.

Referring to FIG. 12, an embodiment of the disclosure further provides a method for WLAN sensing measurement, which is applied to a STA. The method may include the following steps 1201-1202.

At 1201, a NDPA frame is received, and a sensing measurement setup ID and a sensing sounding type ID carried in the NDPA frame are obtained.

In the non-TB Based scenario, the AP receives the NDPA frame and obtains the sensing measurement setup ID carried in the NDPA frame. The sensing measurement setup ID is used to identify the sensing measurement procedure currently being performed. The related parameter information for the WLAN sensing measurement procedure has been determined in the WLAN sensing measurement setup procedure. Therefore, after the sensing measurement setup ID is determined, the related parameter information can be determined. The parameter information includes for example ID information of STA and AP, and the ID information is for example an initiator or a transmitter.

The AP also obtains the sensing sounding type ID carried in the NDPA frame to determine transmission of the UL sounding and the DL sounding.

At 1202, a sensing sounding type corresponding to the sensing sounding type ID is determined, and a WLAN sensing measurement is performed based on the sensing sounding type.

The AP performs the WLAN sensing measurement based on the sensing sounding type corresponding to the sensing measurement setup ID. Optionally, the sensing sounding type may be, for example, UL sounding, DL sounding, or both the UL sounding and the DL sounding.

The STA carries a sensing sounding type ID in the transmitted NDPA frame to identify the transmission of the UL sounding and the DL sounding. For example, two bits may be used to identify. When each of the bits is set to "1", it indicates that both the UL sounding and the DL sounding are included. That is, "11" indicates that both the UL sounding and the DL sounding are included.

Alternatively, a corresponding bit position is "1", indicating the UL sounding or the DL sounding. For example, "10" indicates that only the UL sounding is included, and "01" indicates that only the DL sounding is included.

It may be understood that, since the ID information includes the sensing sounding type ID, the Initiator and the Responder do not need to explicitly provide ID information of the sensing measurement during the sensing measurement setup procedure.

In the embodiment of the disclosure, the NDPA frame is received, and the sensing measurement setup ID and the sensing sounding type ID carried in the NDPA frame are obtained; the sensing sounding type corresponding to the sensing sounding type ID is determined, and the WLAN sensing measurement is performed based on the sensing sounding type. The embodiment of the disclosure provides a sensing measurement method based on non-TB.

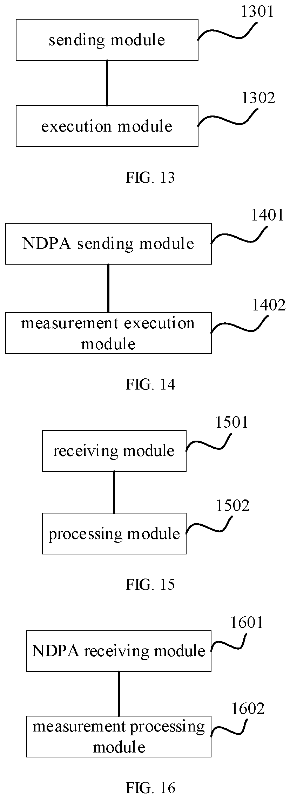

Referring to FIG. 13, based on the same principle as the method in the embodiment of the disclosure, the embodiment of the disclosure further provides a STA, which includes a sending module 1301 and an execution module 1302.

The sending module 1301 is configured to send a NDPA frame, and carry ID information in the NDPA frame. The ID information includes a sensing measurement setup ID.

The execution module 1302 is configured to determine the sensing sounding type corresponding to the ID information, and perform a WLAN sensing measurement based on the sensing sounding type.

Optionally, in an embodiment of the disclosure, the sensing sounding type includes at least one of an UL sensing sounding or a DL sensing sounding.

Optionally, in the embodiment of the disclosure, the execution module 1302 includes a first execution submodule, a second execution submodule and a third execution submodule.

The first execution submodule is configured to, in case that the sensing sounding type includes the UL sensing sounding and the DL sensing sounding, perform the UL sensing sounding and send an UL NDP frame; and after sending the UL NDP frame, instruct an AP to perform the DL sensing sounding and feed back a sounding result.

The second execution submodule is configured to, in case that the sensing sounding type includes the UL sensing sounding, perform the UL sensing sounding and send an UL NDP frame; and after sending the UL NDP frame, instruct an AP to perform the DL sensing sounding, send a DL NDP frame, and feed back a sounding result.

The third execution submodule is configured to, in case that the sensing sounding type includes the DL sensing sounding, instruct an AP to perform the DL sensing sounding.

Optionally, in an embodiment of the disclosure, the ID information also includes a sensing sounding type ID.

Optionally, in the embodiment of the disclosure, the execution module 1302 includes a fourth execution submodule or a fifth execution submodule.

The fourth execution submodule is configured to determine a sensing sounding type included in the WLAN sensing measurement corresponding to the sensing measurement setup ID.

The fifth execution submodule is configured to determine a sensing sounding type indicated by the sensing sounding type ID.

Optionally, in the embodiment of the disclosure, the sensing measurement setup ID is determined by an initiator of the WLAN sensing measurement during a WLAN sensing measurement setup procedure.

In the embodiment of the disclosure, the sending module 1301 sends the NDPA frame and carries the ID information in the NDPA frame; and the execution module 1302 determines the sensing sounding type corresponding to the ID information, and performs the WLAN sensing measurement based on the sensing sounding type. The embodiment of the disclosure provides a sensing measurement method based on non-TB.

Referring to FIG. 14, an embodiment of the disclosure further provides an apparatus for WLAN sensing measurement, which is applied to a STA, and the apparatus includes a NDPA sending module 1401 and a measurement execution module 1402.

The NDPA sending module 1401 is configured to send a NDPA frame, and carry ID information in the NDPA frame. The ID information includes a sensing measurement setup ID.

The measurement execution module 1402 is configured to determine a sensing sounding type corresponding to the ID information, and perform a WLAN sensing measurement based on the sensing sounding type.

The apparatus also includes other modules of the STA in the aforementioned embodiment, which will not be described in detail here.

Referring to FIG. 15, based on the same principle as the method in the embodiment of the disclosure, the embodiment of the disclosure further provides an AP, which includes a receiving module 1501 and a processing module 1502.

The receiving module 1501 is configured to receive a NDPA frame and obtain ID information carried in the NDPA frame. The ID information includes a sensing measurement setup ID.

The processing module 1502 is configured to determine a sensing sounding type corresponding to the ID information, and perform a WLAN sensing measurement based on the sensing sounding type.

Optionally, in an embodiment of the disclosure, the sensing sounding type includes at least one of an UL sensing sounding and a DL sensing sounding.

Optionally, in the embodiment of the disclosure, the processing module 1502 includes a first processing submodule, a second processing submodule and a third processing submodule.

The first processing submodule is configured to, in case that the sensing sounding type includes the UL sensing sounding and the DL sensing sounding, receive an UL NDP frame from a STA, perform the DL sensing sounding, and feed back a sounding result to the STA.

The second processing submodule is configured to, in case that the sensing sounding type includes the UL sensing sounding, receive an UL NDP frame from the STA; perform the DL sensing sounding, send a DLNDP frame to the STA, and feed back a sounding result to the STA.

The third processing submodule is configured to perform the DL sensing sounding in case that the sensing sounding type includes the DL sensing sounding.

Optionally, in an embodiment of the disclosure, the ID information also includes a sensing sounding type ID.

Optionally, in an embodiment of the disclosure, the processing module 1502 includes a fourth processing submodule or a fifth processing submodule.

The fourth processing submodule is configured to determine a sensing sounding type included in the WLAN sensing measurement corresponding to the sensing measurement setup ID.

The fifth processing submodule is configured to determine a sensing sounding type indicated by the sensing sounding type ID.

Optionally, in the embodiment of the disclosure, the sensing measurement setup ID is determined by an initiator of the WLAN sensing measurement during a WLAN sensing measurement setup procedure.

In the embodiment of the disclosure, the receiving module 1501 receives the NDPA frame and obtains the ID information carried in the NDPA frame; the processing module 1502 determines the sensing sounding type corresponding to the ID information and performs the WLAN sensing measurement based on the sensing sounding type. The embodiment of the disclosure provides a sensing measurement method based on non-TB.

Referring to FIG. 16, an embodiment of the disclosure further provides an apparatus for WLAN sensing measurement, which is applied to an AP, and the apparatus includes a NDPA receiving module 1601 and a measurement processing module 1602.

The NDPA receiving module 1601 is configured to receive a NDPA frame and obtain ID information carried in the NDPA frame. The ID information includes a sensing measurement setup ID.

The measurement processing module 1602 is configured to determine a sensing sounding type corresponding to the ID information, and perform a WLAN sensing measurement based on the sensing sounding type.

The apparatus also includes other modules of the AP in the aforementioned embodiment, which will not be described in detail here.

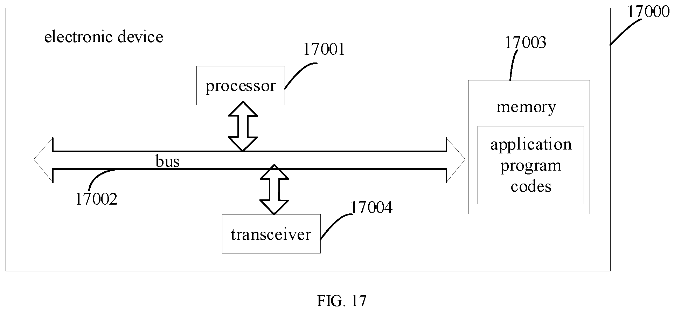

In an optional embodiment, the disclosure further provides an electronic device, as shown in FIG. 17. The electronic device 17000 shown in FIG. 17 may be a server, including: a processor 17001 and a memory 17003. The processor 17001 and the memory 17003 are connected, for example, via a bus 17002. Optionally, the electronic device 17000 may further include a transceiver 17004. It should be noted that in actual applications, the transceiver 17004 is not limited to one, and the structure of the electronic device 17000 does not constitute a limitation on the embodiments of the disclosure.

The processor 17001 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination. The processor 17001 may implement or execute various exemplary logical blocks, modules, and circuits described in conjunction with the contents of the disclosure. The processor 17001 may also be a combination that implements computing functions, such as a combination of one or more microprocessors, a combination of DSP and microprocessor, etc.

The bus 17002 may include a path to transmit information between the above components. The bus 17002 may be a peripheral component interconnect (PCI) bus or an extended industry standard architecture (EISA) bus, etc. The bus 17002 can be divided into an address bus, a data bus, a control bus, etc. For ease of representation, FIG. 17 illustrates only one thick line, but this does not mean that there is only one bus or one type of bus.

The memory 17003 may be a read only memory (ROM) or other types of static storage devices that may store static information and instructions, a random access memory (RAM) or other types of dynamic storage devices that may store information and instructions, or it may be an electrically erasable programmable read only memory (EEPROM), a compact disc read only memory (CD-ROM) or other optical disk storage, an optical disk storage (including a compressed optical disk, a laser disk, an optical disk, a digital versatile disk, a Blu-ray disk, etc.), a magnetic disk storage medium or other magnetic storage device, or any other medium that may be used to carry or store the desired program codes in the form of instructions or data structures and may be accessed by a computer, but is not limited to this.

The memory 17003 is configured to store application program codes for executing the solution of the disclosure, and the execution is controlled by the processor 17001. The processor 17001 is used to execute the application codes stored in the memory 17003 to implement the contents shown in the aforementioned method embodiments.

The electronic device includes but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc., and a fixed terminal such as a digital TV, a desktop computer, etc. The electronic device shown in FIG. 17 is merely an example and should not limit the functions and usage scope of the embodiments of the disclosure.

The server according to the disclosure may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, CDN, as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the disclosure.

An embodiment of the disclosure provides a computer-readable storage medium, on which a computer program is stored. When the computer-readable storage medium is running on a computer, the computer may execute the corresponding contents of the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps and they may be executed in other orders. Moreover, at least part of the steps in the flowchart of the accompanying drawings may include a plurality of sub-steps or a plurality of stages. These sub-steps or stages are not necessarily executed at the same time, but may be executed at different times. The order of execution is not necessarily sequential, but may be executed in turn or alternately with other steps or at least part of the sub-steps or stages of other steps.

It should be noted that the above mentioned computer-readable medium in the disclosure may be a computer-readable signal medium or a computer-readable storage medium or any combination of the two. A computer readable storage medium may be, for example but not limited to, an electronic, magnetic, optical, electromagnetic, infrared, or semiconductor system, apparatus, or device, or any combination of the foregoing. The more specific examples of computer-readable storage media may include, but are not limited to, an electrical connection having one or more conductors, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the disclosure, a computer readable storage medium may be any tangible medium that can contain or store a program for use by or in connection with an instruction execution system, apparatus, or device. In the disclosure, a computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal media may also be any computer-readable media other than computer-readable storage media, which may send, propagate or transport a program for use by or in conjunction with an instruction execution system, apparatus or device. The program code embodied on the computer readable medium may be transmitted using any appropriate medium, including but not limited to: a wire, an optical cable, a radio frequency (RF), etc., or any suitable combination of the foregoing.

The computer-readable medium may be included in the electronic device, or may exist independently without being incorporated into the electronic device.

The computer-readable medium carries one or more programs. When the one or more programs are executed by the electronic device, the electronic device executes the method shown in the above embodiments.

According to one aspect of the disclosure, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations of the disclosure may be written in one or more programming languages or their combination, including object-oriented programming languages such as Java, Smalltalk, C++, and conventional procedural programming languages such as "C" or similar programming languages. The program codes may be executed entirely on a user computer, partly on the user computer, as a stand-alone software package, partly on the user computer and partly on a remote computer or entirely on the remote computer or server. In cases involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possible implementation architectures, functions, and operations of systems, methods, and computer program products according to various embodiments of the disclosure. In this regard, each block in the flowchart or block diagram may represent a module, a program segment, or a portion of codes, which contains one or more executable instructions for implementing the specified logical functions. It should also be noted that, in some alternative implementations, the functions noted in the block may occur out of the order noted in the figures. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules involved in the embodiments described in the disclosure may be implemented in software or hardware. The name of a module does not, in some cases, constitute a limitation on the module itself. For example, module A can also be described as "module A for performing operation B".

The above description is only a preferred embodiment of the disclosure and an illustration of the technical principles used. Those skilled in the art should understand that the scope of disclosure involved in the disclosure is not limited to the technical solutions formed by a specific combination of the above-mentioned technical features, but should also cover other technical solutions formed by any combination of the above-mentioned technical features or their equivalent features without departing from the above-mentioned concepts of the disclosure. For example, the above-mentioned features are replaced with the technical features with similar functions disclosed in this disclosure (but not limited to) to form a technical solution.

## Claims

1. A method for wireless local area network (WLAN) sensing measurement, applied to a station (STA), comprising:
sending a null data packet announcement (NDPA) frame and carrying identification (ID) information in the NDPA frame, wherein the ID information comprises a sensing measurement setup ID; and
determining a sensing sounding type corresponding to the ID information, and performing a WLAN sensing measurement based on the sensing sounding type.

2. The method according to claim 1, wherein the sensing sounding type comprises at least one of an uplink (UL) sensing sounding or a downlink (DL) sensing sounding.

3. The method according to claim 2, wherein performing the WLAN sensing measurement based on the sensing sounding type comprises:
in case that the sensing sounding type comprises the UL sensing sounding and the DL sensing sounding, performing the UL sensing sounding and sending an UL NDP frame; and after sending the UL NDP frame, instructing an access point (AP) to perform the DL sensing sounding and feed back a sounding result;
in case that the sensing sounding type comprises the UL sensing sounding, performing the UL sensing sounding and sending an UL NDP frame; and after sending the UL NDP frame, instructing an AP to perform the DL sensing sounding, send a DLNDP frame, and feed back a sounding result; or
in case that the sensing sounding type comprises the DL sensing sounding, instructing an AP to perform the DL sensing sounding.

4. The method according to claim 1, wherein the ID information further comprises a sensing sounding type ID.

5. The method according to claim 4, wherein determining the sensing sounding type corresponding to the ID information comprises:
determining a sensing sounding type comprised in the WLAN sensing measurement corresponding to the sensing measurement setup ID; or
determining a sensing sounding type indicated by the sensing sounding type ID.

6. The method according to any one of claims 1 to 5, wherein the sensing measurement setup ID is determined by an initiator of the WLAN sensing measurement during a WLAN sensing measurement setup procedure.

7. A method for wireless local area network (WLAN) sensing measurement, applied to an access point (AP), comprising:
receiving a null data packet announcement (NDPA) frame, and obtaining identification (ID) information carried in the NDPA frame, wherein the ID information comprises a sensing measurement setup ID; and
determining a sensing sounding type corresponding to the ID information, and performing a WLAN sensing measurement based on the sensing sounding type.

8. The method according to claim 7, wherein the sensing sounding type comprises at least one of an uplink (UL) sensing sounding or a downlink (DL) sensing sounding.

9. The method according to claim 8, wherein performing the WLAN sensing measurement based on the sensing sounding type comprises:
in case that the sensing sounding type comprises the UL sensing sounding and the DL sensing sounding, receiving an UL NDP frame from a station (STA), performing the DL sensing sounding, and feeding back a sounding result to the STA;
in case that the sensing sounding type comprises the UL sensing sounding, receiving an UL NDP frame from the STA; performing the DL sensing sounding, sending a DL NDP frame to the STA, and feeding back a sounding result to the STA; or
in case that the sensing sounding type comprises the DL sensing sounding, performing the DL sensing sounding.

10. The method according to claim 7, wherein the ID information further comprises a sensing sounding type ID.

11. The method according to claim 10, wherein determining the sensing sounding type corresponding to the ID information comprises:
determining a sensing sounding type comprised in the WLAN sensing measurement corresponding to the sensing measurement setup ID; or
determining a sensing sounding type indicated by the sensing sounding type ID.

12. The method according to any one of claims 7 to 11, wherein the sensing measurement setup ID is determined by an initiator of the WLAN sensing measurement during a WLAN sensing measurement setup procedure.

13. A station (STA), comprising:
a sending module, configured to send a null data packet announcement (NDPA) frame, and carry identification (ID) information in the NDPA frame, wherein the ID information comprises a sensing measurement setup ID; and
an execution module, configured to determine the sensing sounding type corresponding to the ID information, and perform a wireless local area network (WLAN) sensing measurement based on the sensing sounding type.

14. An access point (AP), comprising:
a receiving module, configured to receive a null data packet announcement (NDPA) frame, and obtain identification (ID) information carried in the NDPA frame, wherein the ID information comprises a sensing measurement setup ID; and
a processing module, configured to determine a sensing sounding type corresponding to the ID information, and perform a wireless local area network (WLAN) sensing measurement based on the sensing sounding type.

15. An apparatus for wireless local area network (WLAN) sensing measurement, applied to a station (STA), comprising:
a NDPA sending module, configured to send a null data packet announcement (NDPA) frame, and carry identification (ID) information in the NDPA frame, wherein the ID information comprises a sensing measurement setup ID; and
a measurement execution module, configured to determine a sensing sounding type corresponding to the ID information, and perform a WLAN sensing measurement based on the sensing sounding type.

16. An apparatus for wireless local area network (WLAN) sensing measurement, applied to an access point (AP), comprising:
a NDPA receiving module, configured to receive a null data packet announcement (NDPA) frame, and obtain identification (ID) information carried in the NDPA frame, wherein the ID information comprises a sensing measurement setup ID; and
a measurement processing module, configured to determine a sensing sounding type corresponding to the ID information, and perform a WLAN sensing measurement based on the sensing sounding type.

17. An electronic device, comprising: a processor, and a memory storing a computer program executable by the processor, wherein when the computer program is executed by the processor, the method according to any one of claims 1 to 12 is implemented.

18. A computer-readable storage medium having a computer program stored which, when executed by a processor, to implement the method according to any one of claims 1 to 12.
